(19) Europäisches Patentamt
European Patent Office
Office européen des brevets

(11) Veröffentlichungsnummer: **0 016 870**
**B2**

(12) # NEUE EUROPÄISCHE PATENTSCHRIFT

(45) Veröffentlichungstag der neuen Patentschrift: **12.08.87**

(51) Int. Cl.⁴: **C 08 F 2/44**, C 08 F 20/18, C 08 K 5/34, A 61 N 5/06

(21) Anmeldenummer: **79105366.3**

(22) Anmeldetag: **24.12.79**

(54) **Verfahren zum Polymerisieren von Methylmethacrylat sowie aus diesem Polymerisat hergestellte Platte und Verwendung derselben.**

(30) Priorität: **06.04.79 DE 2913853**

(43) Veröffentlichungstag der Anmeldung: **15.10.80 Patentblatt 80/21**

(45) Bekanntmachung des Hinweises auf die Patenterteilung: **21.04.82 Patentblatt 82/16**

(45) Bekanntmachung des Hinweises auf die Entscheidung über den Einspruch: **12.08.87 Patentblatt 87/33**

(84) Benannte Vertragsstaaten: **DE FR GB NL SE**

(56) Entgegenhaltungen:
**DE-A-2 352 658**
**DE-A-2 417 535**
**DE-A-2 459 381**
**CHEMICAL ABSTRACTS, Band 83, no. 22, 1. December 1975, Seite 55, Zusammenfassung 180327g, Columbus, Ohio, USA**
**Journal of Polymer SCience Part A, vol. 7, 1425-1435**
**Journal of Polymer Science Part A, vol. 1, pp. 1079-1086**
**Firmenschrift SANOL-LS-770 (Sanky Co) 1973**
**NBSIR 78-1463 (U.S. Department of Commerce) pp. 54-55**
**Appl. Chem. 1973, 36 (1-2), pp. 141-161**
**Technische Information CIBA-GEIGY: Tinavin 770**

(73) Patentinhaber: **Röhm GmbH, Kirschenallee Postfach 4242, D-6100 Darmstadt 1 (DE)**

(72) Erfinder: **Hosch, Ludwig, Grüner Weg 34, D-6100 Darmstadt (DE)**

**EP 0 016 870 B2**

LIBER, STOCKHOLM 1987

**Beschreibung**

Die Erfindung betrifft die Herstellung und Verwendung von Co-polymerisaten des Methylmethacrylats von hoher Beständigkeit gegen UV-Strahlung und thermische Schädigungen. Die Polymerisate des Methylmethacrylats zeichnen sich zwar gegenüber anderen Polymeren bereits durch eine hohe Beständigkeit gegen die genannten Einwirkung aus, jedoch treten bei längerer Einwirkung gewisse Schädingungen dieser Polymerisate ein So beobachtet man z. B. eine Verminderung der Vicat-Erweichungstemperatur um 8 bis 10, wenn Polymethylmethacrylat zum Zwecke der Umformung auf eine Temperatur von 160° erhitzt worden ist. Die Durchlässigkeit für UV-Strahlung erheblich ab. Gleichzeitig läßt sich eine Verringerung des Molekulargewichts feststellen, was verschlechterte mechanische Eigenschaften zur Folge hat.

Ähnliche Schädigungen sind auch von anderen Polymerisaten, wie Polyolefine, Polystyrol, Polyvinylchlorid oder Polyestern bekannt. Sie lassen sich vermindern wenn man bei der thermoplastischen Verarbeitung dieser Polymeren sogenannte Lichtschutzmittel einarbeitet. Hoch wirksame Lichtschutzmittel sind z.B. Derivate des 2,2,6,6-Tetramethylpiperidins. [H. J. Heller. H.R. Blattmann, Pure Appl. Chem. 1973, 36 (1-2), 141-61]. Diese Verbindungen verhindern radikalische Abbaureaktionen an den Polymeren, indem sie einerseits mit dem bei UV-Bestrahlung und Sauerstoffeinwirkung gebildeten Hydroperoxiden reagieren und andererersetis Radikale abfangen. Sie werden gemäß DE-OS 2 471 535 in Polystyrol und gemäß der japanischen Patentanmeldung 7 558 141 in Polyolefine oder PVC im thermoplastischen Zustand dieser Polymeren eingearbeitet, jeweils in Kombination mit UV-Absorbern.

Bei dem Versuch auch Formmassen auf Basis von Polymethylmethacrylat durch Einarbeiten von 2,2,6,6-Tetramethylpiperidin Verbindungen in entsprechender Weise gegen schädigende Einflüsse der genannten Art zu schützen, ergaben sich von vornherein sehr niedrige Werte für die Durchlässigkeit von UV Strahlung und eine weitere Verminderung der Durchlässigkeit trat bei UV-Bestrahlung auf in zwei Formmassen wurden jeweils 0,25 Gew.-% Di-(2,2,6,6-Tetramethyl-piperidyl-4 sebacat (TPS) auf dem Extruder eingearbeitet, die Formmassen zu einer 6 mm dicken Platte verarbeitet und die Durchlässigkeit für UV-Strahlung von 300 nm nach zunehmenden Belichtungszeiten mittels einem UV-A Strahler 300-400 nm) und einem UV-B-Strahler (260-320 nm) gemessen. Die Ergebnisse sind in der nachfolgenden Tabelle angegeben

| Formmasse | Lichtschutzmittel in Gew. % | Durchlassigkeit bei 300 nm in % Strahler-Art | Bestrahlungsdauer (Std.) 0 h | 72 h | 250 h | 1 000 h |
|---|---|---|---|---|---|---|
| Copolymerisat | ohne | A | 65 | 65 | 62 | 45 |
| 95 % Methylmethacrylat | ohne | B | 65 | 48 | 31 | 28 |
| 5 % Methylacrylat (Formmasse) | 0,25 % TPS, im Extruder homogenisiert | A | 55 | 52 | 50 | 43 |
| | | B | 54 | 51 | 43 | 37 |
| Methylmethacrylat ( ) | 0,25 % TPS, im Extruder homogenisiert | A | 55 | 52 | 49 | 36 |
| | | B | 55 | 52 | 43 | 27 |
| Homopolymerisat (Formmasse) | 0,25 % TPS, einpolymerisiert | A | 83 | 80 | 76 | — |
| | | B | 83 | 81 | 72 | — |

Die Durchlässigkeitswerte, die bei den Formmassen mit im thermoplastichen Zustand eingearbeitetem TPS gefunden wurden, ließen diesen Zusatz für Polymerisate auf Basis von Polymethylmethacrylaten ungeeignet erscheinen.

Überraschenderweise tritt die Schutzwirkung des TPS jedoch dann auf, wenn die radikalische Copolymerisation von Methylmethacrylat in Gegenwart dieses Stabilisierungsmittels durchgeführt wird. Die Copolymerisation verlauft in Gegenwart der genannten Verbindungen ohne verlängerte Inhibierungsperiode mit unveränderter Geschwindigkeit und führt zu hochmolekularen Produkten. Überraschenderweise ist sowohl die Anfangsdurchlässigkeit als auch die Durchlässigkeit nach langer Belichtung höher, wenn das Lichtschutsmittel schon bei der Copolymerisation und nicht erst im thermoplastischen Zustand zugesetzt wird. Dies geht aus der letzten Zeile der obigen Tabelle hervor.

Die thermische Stabilisierung zeigt sich auch bei der Herstellung von PMMA-Platten aus einem vorpolymerisierten Sirup Methylmethacrylat wird in einer ersten Polymetrisationsstufe zu einem sogenannten

Sirup mit einem Polymerisatgehalt von etwa 25% umgesetzt. Stellt man aus einem solchen Sirup durch Polymerisation in einer aus zwei Glasplatten gebildeten Flachkammer eine Platte her, so findet man an dieser eine Vicat-Erweichungstemperatur (VET) von 119°C Bei halbstündigem Erhitzen auf 160°C sinkt die VET auf 111°C. Setzt man dem Sirup als Thermostabilisator einen Thioäther, z.B. Thiodipropionsäuredilaurylester, zu, so erreicht man an der auspolymerisierten Platte eine VET von nur 110°C die allerdings bei halbstündigem Erhitzen auf 160 nur geringfügig auf 108 bis 109 absinkt. Versetzt man dagegen erfindungsgemäß den Sirup mit 0,05 Gew.-% Di-(tetramethylpiperidyl)-sebacat (TPS), so erhält man eine PMMA-Platte mit einer VET von 119°C bei halbstundigem Erhitzen auf 160°C sinkt die VET nur unwesentlich ab und bleibt mit 117°C auf einem Wert, der mit keinem anderen Material zu erhalten war.

Für die Verwendung von PMMA-Platten bei der Errichtung von Gewächshäusern oder zum Bau von Solarien ist es von Bedeutung, daß die Durchlässigkeit für UV-Strahlungüber die Lebensdauer dieser Erzeugnisse im wesentlichen erhalten bleibt. Reines PMMA ist in dieser Hinschicht nicht voll befriedigend; bei der Belichtung einer 6 mm dicken Scheibe mit einer UV-Lampe mit einem Strahlungmaximum bei 300 nm sinkt die Transmission bei dieser Wellenlänge innerhalb von 1000 Std von anfänglich 82% auf etwa 12% ab. Wird dagegen eine entsprechende Polymerisatscheibe von 6 mm mit einem Gehalt von 0,25% an Di- (tetramethylpiperidyl)sebacat erzeugt, so sinkt die Durchlässigkeit bei 300 nm in der gleichen Zeit nur auf etwa 63% ab. Noch günstigere Ergebnisse werden erfindungsgemäß bei Mischpolymerisaten aus 88% Methylmethacrylat und 12% Methylacrylat gefunden. Ohne TPS findet man einen Anfangwert von 76% Durchlässigkeit nach 1000 Stunden nach 49% Mn 0,25% TPS hergestellt entsteht eine Platte mit einer Anfangsdurchlässigkeit von 80% die innerhalb einer 1000 stundigen Belichtung nicht meßbar absinkt. Tauscht man den Zusatz von TPS gegen andere bakannte Stabilisatoren gegen photooxydative Schädigung aus so ist eine starkere Verminderung der UV-Durchlässigkeit zu beobachten. So wurde nach 1000 Std bei einem Gehalt von 0,05% Di-tert. dodecyldisulfid eine Durchlässigkeit von etwa 20% mit 0,25% Thiodipropionsäure-dilaurylester eine Durchlässigkeit von 17% und mit 0,23 % Bis-(2-methoxicarbonylpropyl)-sulfid nur noch eine Durchlässigkeit von 12% erhalten.

Bei der freier Bewitterung einer PMMA-Platte tritt ein langsamer Molekulargewichtsabbau ein, erkennbar an Absinken der reduzierten Viskosität. Bei einem Gehalt von 0,05% Di-(tetramethyl piperidyl)sebacat - 0,05% eines üblichen UV-Absorbers, wie Benztriazol oder Benztriazolderivaten sinkt die reduzierte Viskosität von ursprünglich 7/sp/C= 1175 ml/g innerhalb von 2 Jahren auf 7/sp/C = 1029 ml/g. Ohne den erfindungsgemäßen Zusatz ist ein Absinken auf 7/sp/C = 545 ml/g festzustellen. Im Gegensatz zu UV-strahlungsabsorbierenden Zusätzen alein, wie Benztriazolen oder Benzophenonderivaten deren schützende Wirkung nur den im Innern der Platte gelegenen PMMA-Molekülen zugute kommt, erstreckt sich die Wirkung der erfindungsgemäßen Zusätze bis an die Plattenoberfläche. Daher wird auch die Oberflächenkorrosion vermieden.

>Die Wirksamkeit der erfindungsgemäß verwendeten Zusätze wird auf die darin enthaltene sterisch gehinderte Aminstruktur

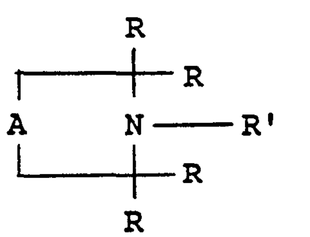

zurückgeführt. Darin bedeuten R gleische oder verschieden Alkylreste, insbesondere niedere Alkylreste mit 1 bis 4 C-Atomen, vorzugsweise Methylgruppen- R' Wasserstoff oder einen - vorzugsweise niederen - Alkylrest und A eine gegebenfalls substituiert 2, oder 3-gliedrige Alkylenkette, die das Molekül zu einem gesättigten heterozyklischen Ring schließt. Vorzugsweise ist R' ein Wasserstoffatom und A eine 3-gliedrige Alkylenkette. Besonders bevorzugt sind Verbindungen, die sich vom 2,2,6,6-Tetramethylpiperidin ableiten, wie z.B. Bis-(2,2,6,6-tetramethyl-piperidyl-4) oder (2,2,6,6-Tetramethyl-piperidyl-4) ester von aliphatischen Dicarbonsäuren mit 4 bis 12 C-Atomen, z. B. Sebacinsäure. Die sterisch gehinderten Amine werden im allgemeinen in einer Menge von 0,01 bis 1%, vorzugsweise 0,1 bis 0,5%, jeweils bezogen auf das Gewicht der zu polymerisierenden Monomeren, eingesetzt.

Die erfindungsgemäße Copolymerisation des Methylmethacrylats wird in der Regel in Substanz, d.h. in Abwesenheit von wesentlichen Mengen an inerten Lösungs- oder Verteilungsmitteln durchgefürt. Vorzugsweise wird in einer aus zwei parallelen Glasplatten und einer am Rand herumgefürten Dichtungsschnur gebildeten Flachkammer in situ polymerisiert, wobei PMMA-Platten von beispielsweise 2 bis 20 mm Dicke hergestellt werden.

Neben Methylmetharcrylat, das wenigstens 80% der zu polymerisierenden Monomeren ausmacht, werden ein oder mehrere Comonomere mitverwendet. Dabei werden Alkylester der Acrylsäure in einer Menge bis zu 15% des gesamten Monomerengewichts eingesetzt. Alkylester der Acrylsäure mit 1 bis 4 C-Atomen im Alkylrest sind die bevorzugten Comonomeren. Als weitere Comonomere sind die Alkylester der Methacrylsäure, die wenigstens zwei C-Atome im Alkylrest enthalten, Styrol, Vinylacetat sowie - in untergeordneten Mengen - Monomere mit zwei oder mehr polymerisierbaren Doppelbindungen zu nennen, beispielsweise Divinylbenzol, Triallylcyanurat, Äthylenglykol-dimethacrylat oder Allylacrylat oder -methacrylat.

Die radikalische Polymerisation der Monomeren kann mit den üblichen Mengen der gebräuchlichen radikalischen Initiatoren ausgelöst werden. Man verwendet z.B. Peroxide, wie Dibenzoylperoxid, Dilauroylperoxid, tert.-Butylperpivalat oder -percarbonat, oder Azoinitiatoren, wie Azo-bis-isobutyronitril oder -isobuttersäuremethylester. Je nach der Zerfallstemperatur des verwendeten radikalbildenden Initiators wird die Polymerisation in an sich bekannter Weise bei einer Temperatur zwischen 20 und 120°C durchgeführt, wobei die niedrigsten Temperaturen in diesem Bereich mit Redox-Initiatoren zu verwirklichen sind, Die bevorzugte Polymerisationstemperatur liegt bei 40 bis 100°C.

Es ist überraschend daß die erfindungsgemäß eingesetzten Amine keinen Einfluß auf die Zerfallstemperatur und geschwindigkeit der Initiatoren ausüben. Mit den gebräuchlichen Initiatormengen von 0,02 bis 0,1 Gew.-% (bezogen auf Monomergewicht) erhält man Polymerisate mit einem Molekulargewicht von 500 000 oder darüber. Besonders bevorzugte Molekulargewichtsbereiche liegen bei 1 bis 2 Millionen einerseits und bei mehr als 5 Millionen anderseits. Durch Polymerisation in Gegenwart von Übertragungsreglern, insbesondere Merkaptanen, läßt sich das Molekulargewicht in niedrigen Grenzen halten, jedoch wird vorzugsweise ein Molekulargewicht von 150 000 nicht unterschritten.

Die nach den Verfahren der Erfindung hergestellten Copolymerisate, insbesondere die daraus bestehenden Platten, eignen sich in besonderem Maße für alle Zwecke, bei denen es auf eine dauerhaft hohe Durchlässigkeit für UV-Strahlung ankommt, z.B. bei Solarien. Diese enthalten unter einer planen oder muldenartig geformten Liegefläche aus einer PMMA-Platte Leuchtröhren, die UV-Strahlung mit einer hohen Intensität in einem Bereich oberhalb 280 nm aussenden. Ein weiteres wichtiges Einsatzgebiet sind durch Umformen von diesen Platte hergestellte Formkörper, z.B. Lampenabdeckungen, die sich gegenüber solchen aus herkömmlichen PMMA-Platten durch eine erhöhte Wärmeformbeständigkeit auszeichnen.

In den nachfolgenden Beispielen sin »Teile« stets Gewichtsteile.

**Beispiel 1**

100 Teile eines Gemisches aus Methylmethacrylat mit 12 Gew.-% Methylacrylat werden mit 0,05 Teilen Azo-bis-isobutyronitril und 0,25 Teilen TPS versetzt und 16 Stunden bei 40-45°C und 3 Stunden bei 120°C in einen vgl. Zeilen 4/5 aus zwei Glasplatten ind einer dazwischen am Rand umlaufenden Dichtungsschnur gebildeten Flachkammer zu einer 6 mm dicken Platte polymerisiert. Zum Vergleich wird eine Platte ohne den Zusatz von TPS hergestellt. Die UV-Strahlungsdurchlässigkeit nach Belichtung mit einem UV-A-Strahler wird gemessen:

| Durchlässigkeit für 300 nm Strahlung nach UV-A-Bestrahlung | 0 | 250 | 1000 Stunden |
|---|---|---|---|
| Platte mit TPS | 80% | 78% | 80% |
| Platte ohne TPS | 76% | 40% | 49% |

**Beispiel 2**

Entsprechend Beispiel 1 wird eine Platte aus einem Gemish von 88 Gew.-% Methylmethacrylat und 12 Gew.-% Äthylacrylat hergestellt. Die Vicat-Erweichungstemperatur beträgt 99°C. Die Durchlässigkeit für UV-Strahlung von 300 nm beträgt anfangs 80% und nach 250 Stunden UV-A-Bestrahlung 75%.

**Patentansprüche**

1. Verfahren zur Herstellung von Copolymerisaten des Methylmethacrylats mit dauerhaft hoher Durchlässigkeit im UV-A-Bereich, dadurch gekennzeichnet, daß man Methylmethacrylat in einer Menge von wenigstens 80 Gew.-% der zu polymerisierenden Monomeren mit Alkylestern der Acrylsäure in Gegenwart von radikalbildenden Initiatoren und eines sterisch gehinderten Amins der Formel I

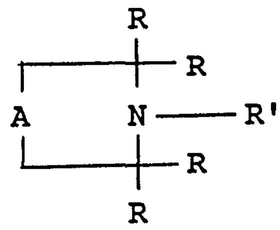

worin R gleiche oder verschiedene Alkylreste, R' Wasserstoff oder einen Alkylrest und A eine gegebenenfalls substituierte 2- oder 3-gliedrige Alkylenkette darstellt, copolymerisiert.

2. Verfahren nach Ansptuch 1, dadurch gekennzeichet, daß als sterisch gehindertes Amin ein Derivat des 2,2,6,6-Tetramethylpiperidins eingesetzt wird.

3. Verfahren nach Anspruch 2, dadurch gekennzeichnet, daß als Derivat des 2,2,6,6-Tetramethyl-piperidins eine Verbindung der Formel

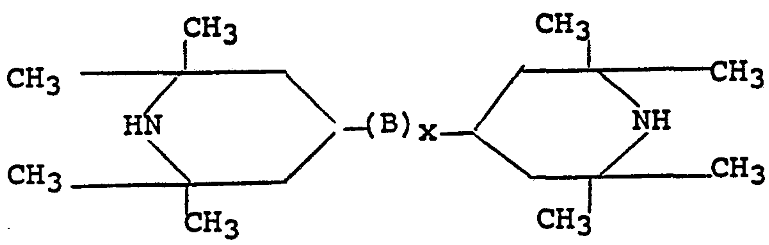

eingesetzt wird, worin B die Gruppe -O-CO-$(CH_2)_y$-CO-O-,x=0 oder 1 und y eine ganze Zahl zwischen 2 bis 10 ist.

4. Verfahren nach den Ansprüchen 1 bis 3 dadurch gekennzeichnet, daß das sterisch gehinderte Amin in einer Menge von 0,01 bis 1% bezogen auf das Gewicht der Monomeren, eingesetzt wird.

5. Platte mit dauerhaft hoher Strahlungsdurchlässigkeit im UV-A-Bereich dadurch gekennzeichnet, daß aus einem in situ erzeugten Copolymerisat des Methylmethacrylats mit einem Molekulargewicht über 500 000, das Copolymerisat ein zu wenigstens 80 Gew.-% aus Methylmethacrylat und aus Alkylestern der Acrylsäure mit 1 bis 4 C-Atomen im Alkylrest aufgebautes Mischpolymerisat ist und ein sterisch gehindertes Amin der Formel I enthält.

6. Verwendung einer Platte gemäß Anspruch 5 als UV-strahlungsdurchlässiges Material in Solarien.

**Claims**

1. Process for producing copolymers of methyl methacrylate having permanently high transparency in the UV-A region, characterised in that methyl methacrylate is copolymerised in an amount of at least 80 % by weight with acrylic acid alkyl esters in the presence of radical-forming initiators and in the presence of a sterically hindered amine of formula I

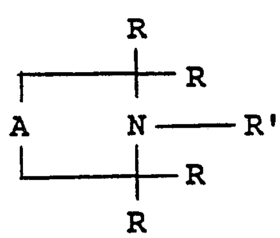

wherein R represents identical or different alkyl groups, R' represents hydrogen or an alkyl group and A represents an optionally substituted 2- or 3-membered alkylene chain.

2. Process as claimed in claim 1, characterised in that a derivative of 2,2,6,6-tetramethyl-piperidine is used as the sterically hindered amine.

3. Process as claim 2, characterised in that a compound of formula

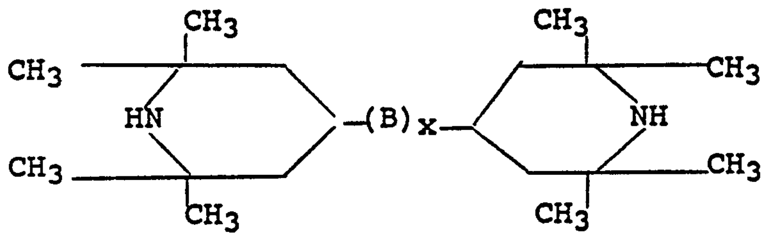

wherein B represents the group - O - CH - $(CH_2)_y$ - CO - O,x = 0 or 1 and y is a whole number between 2 and 10, is used as the derivative of 2,2,6,6-tetramethyl-piperidine.

4. process as claimed in claims 1 tó 3, characterised in that the sterically hindered amine is used in an amount of from 0,01 to 1 % based on the weight of the monomers.

5. Sheet having permanently high transparency in the UV-A region consisting of a copolymer of methyl methacrylate with a molecular weight of over 500,000, produced in situ, caracterised in that the copolymer is composed of at least 80 % by weight of methyl methacrylate and of acrylic acid alkyl esters having 1 to 4 carbon atoms in the alkyl group and contains a sterically hindered amine of formula I.

6. Use of a sheet as claimed in claim 5, as a material pervious to UV radiation in solaria.

**Revendications**

1. Procédé pour la production de copolymères du méthacrylate de méthyle à perméabilité permanente au rayonnement UV-A, caractérisé en ce qu'on copolymérise du méthacrylate de méthyle dans une quantité d'au moins 80 % en poids avec des esters alcoyliques de l'acide acrylique en présence d'initiateurs radicalaires et d'une amine à empèchement stérique de formule I

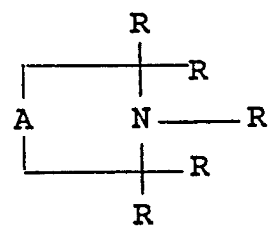

dans laquelle les symboles R représentent des radicaux alcoyles semblables ou différents, R' un hydrogène ou un radical alcoyle et A une chaine alcoylène à 2 ou 3 termes éventuellement substituée.

2. Procédé selon la revendication 1, caractérisé en ce qu'on utilise, en tant qu'amine à empechement stérique, und dérivé de la 2,2,6,6-tétraméthylpipéridine.

3. Procédé selon la revendication 2, caractérisé en ce qu'on utilise, en tant que dérivé de la 2,2,6,6-tétraméthylpipéridine, un composé de formule

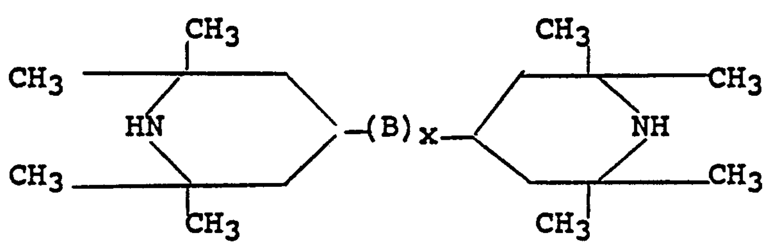

dans laquelle B est le groupe - O - CO - $(CH_2)_y$ - CO - O,x = 0 ou 1 et y est un nombre entier entre 2 et 10.

4. Procéde selon l'une quelconque des revendications 1 à 3, caractérisé en ce que l'amine à empechement stérique et utilisée dans und proportion de 0,01 à 1 % par rapport au poids des monomères.

5. Plaque à perméabilité permanente au rayonnement UV-A d'un copolymère du méthacrylate de méthyle de poids moléculaire supérieur à 500 000, formé in situ, caractérisée en ce que le copolymère est composé d'au

moins 80 % en poids de méthacrylate de méthyle et d'esters alcoyliques de l'acide acrylique à 1 - 4 atomes de carbone dans le radical alcoyle et contient une amine à empêchement stérique de formule I.

6. Utilisation d'une plaque selon la revendication 5 comme matériau perméable au rayonnement ultraviolet dans des solariums.